# EUROPÄISCHE PATENTSCHRIFT

(11) **EP 0 537 315 B1**
(45) Veröffentlichungstag und Bekanntmachung des Hinweises auf die Patenterteilung: **25.09.1996**
(21) Anmeldenummer: 92909178.3
(22) Anmeldetag: 30.04.1992
(51) Int. Cl.: D21G 1/02, F16C 13/00, B29C 33/04, B21B 13/14, B21B 27/05, B21B 27/10

(54) **DURCHBIEGUNGSEINSTELLWALZE UND DEREN VERWENDUNG**
CONTROLLED DEFLECTION ROLL AND ITS USE
ROULEAU A FLEXION CONTROLEE ET SON UTILISATION

(30) Priorität: 03.05.1991 CH 1330/91; 08.08.1991 DE 4126232
(43) Veröffentlichungstag der Anmeldung: 21.04.1993
(73) Patentinhaber: Voith Sulzer Papiermaschinen GmbH, 89509 Heidenheim (DE)
(72) Erfinder: LEHMANN, Rolf, D-8964 Rudolfstetten (CH); SCHNYDER, Eugen, D-5622 Waltenschwil (CH)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) Internationale Anmeldenummer: EP9200947
(87) Internationale Veröffentlichungsnummer: WO9219809

(56) Entgegenhaltungen:
- DE-A- 2 522 657
- DE-A- 3 300 251
- DE-A- 3 525 950
- DE-A- 3 937 246
- DE-B- 1 281 256
- GB-A- 2 187 407
- GB-A- 2 200 588
- US-A- 1 954 027
- US-A- 5 023 985

## Beschreibung

Die Erfindung betrifft eine Walze nach dem Oberbegriff von Anspruch 1, sowie deren Verwendung zu Kühl- oder Heizzwecken.

Solche mit Stützelementen steuerbarer Stützkraft ausgerüsteten sogenannten Durchbiegungseinstellwalzen mit einem mehrschichtigen Walzenmantel sind beispielsweise aus der DE 35 25 950 bekannt und werden zur thermischen Behandlung von Warenbahnen verwendet. Hierbei haben die einzelnen Schichten des Walzenmantels unterschiedliche physikalische, insbesondere thermische Eigenschaften.

In der Regel besteht die innere Zone des Walzenmantels aus einem harten Material, z.B. Metall, und die äußere Zone aus weichem Material, z.B. einem Elastomer, wie Weichkautschuk oder dergleichen. Für manche Verwendungen, z.B. für die thermische Behandlung einer Papierbahn in einem Glättkalander oder für die thermische Behandlung oder Herstellung einer Kunstoffolie sind solche Durchbiegungseinstellwalzen mit Walzenmänteln dieser bekannten Art jedoch nur bedingt geeignet. Nachteilig ist insbesondere, daß die äußere Zone eine schlechte Wärmeleitfähigkeit aufweist, so daß keine gute Wärmeabfuhr gewährleistet ist und die Temperatur während der Behandlung der Warenbahn nur ungenügend konstant gehalten werden kann.

Die Verwendung von Durchbiegungseinstellwalzen für Kunstoffolien-Gießanlagen ist beispielsweise aus der DE-A-33 00 251 bekannt. Hierbei wird die fließfähige Kunststoffmasse zwischen zwei Walzen geleitet und während der Erstarrung vermittels der steuerbaren Stützkraft der Stützelemente der als Durchbiegungseinstellwalze ausgebildeten Walze auf ein vorgesehenes Dickenprofil gebracht. Für bestimmte Kunststoffe, welche einen relativ plötzlichen Übergang zwischen dem fließfähigen und dem festen Zustand in einem engen Temperaturbereich zeigen, sind solche Durchbiegungseinstellwalzen mit Walzenmänteln bekannter Art jedoch nur schlecht geeignet. Einerseits muß bei solchen schnell erstarrenden Kunststoffen, z.B. Polyethylen, der Press- und Dickensteuerungsvorgang zu einem genau bestimmten Zeitpunkt bei möglichst exakter Temperatur stattfinden, was bei thermoplastischen Kunststoffen mit einem größeren Erstarrungsbereich nicht in dem Maße erforderlich ist, und andererseits neigen schnell erstarrende Kunststoffe während des Erstarrungsvorganges zum Ankleben an die üblichen Walzenoberflächen.

Aufgabe der Erfindung ist es, die vorstehend erwähnten Nachteile des Standes der Technik zu beseitigen und insbesondere eine Walze mit steuerbarer Stützkraft zu schaffen, die es gestattet, die Temperatur in einem Walzenspalt in einem engen Toleranzbereich zu halten und damit eine optimale thermische Behandlung von Warenbahnen sowie auch eine Herstellung von Kunststoffolien aus schnell erstarrenden Kunststoffen zu verbessern.

Gelöst wird diese Aufgabe gemäß der Erfindung bei einer Walze der eingangs genannten Art im wesentlichen durch die Merkmale des Kennzeichnungsteils von Anspruch 1.

Durch die gewählte Kombination von Schichten bestimmter Eigenschaften und Stärke ist es einerseits möglich, die Vorteile einer Durchbiegungseinstellwalze in vollem Umfange zu nutzen und andererseits eine feinfühlige und exakte Temperaturregelung im Walzenspalt zu gewährleisten, da die Wärmekapazität der äußeren Zone durch Materialwahl und Dickendimensionierung genau vorgegeben werden kann und keine störende Beeinflussung durch die innere Zone gegeben ist.

Außerdem läßt sich durch diesen Aufbau eine Verringerung der Masse des Walzenmantels im Vergleich zu Metallwalzen und damit eine Verbesserung der dynamischen Eigenschaften, wie z.B. der Schwingungsdämpfung erzielen. Von besonderem Vorteil ist ferner, daß durch die gewählte Kombination von Zonen unterschiedlicher Eigenschaften die Gefahr einer Beschädigung oder Zerstörung der dünnen und harten Außenschicht bei Auftreten lokaler Belastungen in Form von Punktlasten oder Linienlasten beseitigt ist. Das Verhältnis der Härten, Elastizitätsmodule und Schichtdicken wird dazu bezüglich der einzelnen Zonen oder Bereiche so gewählt, daß bei vorgegebener Belastungshöhe und Belastungsart die jeweils äußere und jeweils härtere Schicht des Zonenaufbaus von der darunterliegenden Schicht in der Form abgestützt wird, daß weder die zulässigen Spannungen noch die zulässigen Dehnungen in der härteren Schicht überschritten werden.

Die äußere Zone mit möglichst großer thermischer Leitfähigkeit kann von der äußersten Schicht selbst gebildet sein, aber es ist auch möglich, eine unter der äußersten Schicht gelegene Schicht aus einem anderen Material mit höherer thermischer Leitfähigkeit, z.B. Kupfer oder Silber, auszubilden, wobei sich radial nach innen an diese Schicht die dickere, eine sehr geringe thermische Leitfähigkeit besitzende innere Zone anschließt, die vorzugsweise aus zwei konzentrischen Bereichen besteht, wobei der radial äußere Bereich jeweils einen größeren Elastizitätsmodul aufweist. Der radial äußere Bereich kann dabei aus einem Duromer/Plastomer mit einem Elastizitätsmodul von etwa 10³ bis 10⁴ N/mm² bestehen, während der radial innere Bereich aus einem Plastomer/Elastomer bestehen kann und dabei der Elastizitätsmodul vorzugsweise im Bereich von 10 bis 1,5 x 10⁵ N/mm² gelegen ist.

Bei Verwendung bestimmter Stützelement-Typen, ist es zweckmäßig, als innerste Zone innerhalb des gummielastischen, radial inneren Bereichs zusätzliche dünne feste Laufflächen, z.B. aus Metall, für die Lagerflächen der Stützelemente vorzusehen.

Besonders vorteilhaft ist es, die Walze nach der Erfindung zur Kühlung oder Erwärmung von Warenbahnen, insbesondere von Papierbahnen, von kaschierten Bahnen, insbesondere mit Folie kaschierten Papierbahnen oder zur Folienherstellung zu verwenden.

Weitere besonders vorteilhafte Ausgestaltungen und Merkmale der Erfindung sind in den Unteransprüchen angegeben.

Die Erfindung wird anhand der beiliegenden Figuren näher erläutert. Es zeigen:

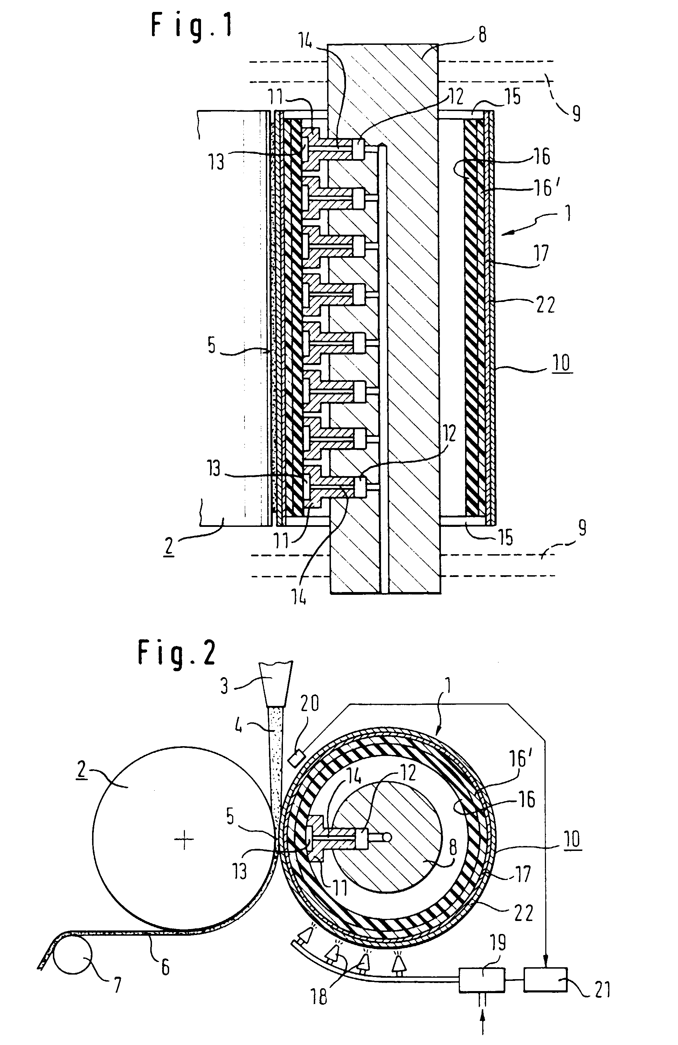

- Fig. 1: eine Walze im horizontalen Axialschnitt, und
- Fig. 2: eine Walze gemäß Figur 1 im Radialschnitt, bei Verwendung beispielsweise in einer Foliengießanlage.

Bei der in den Figuren dargestellten Anordnung wirkt eine Durchbiegungseinstellwalze 1 mit einer Gegenwalze 2 zusammen, die als konventionelle Massiv- oder Hohlwalze ausgebildet sein kann oder aber ebenfalls als Durchbiegungseinstellwalze. Aus einem Extruder 3 strömt fließfähige Kunststoffmasse 4 in den Spalt 5 zwischen den Walzen 1 und 2 und erstarrt dort zu einer Kunststoffolie 6, die über eine Umlenkrolle 7 abgeführt wird.

Die Durchbiegungseinstellwalze 1 weist einen Träger 8 auf, welcher in einem Gerüst 9 drehfest, jedoch in beschränktem Maße neigbar gelagert ist, wie dies im Detail beispielsweise aus der US 3 802 044 oder US 3 885 283 bekannt ist. Ein Walzenmantel 10 ist gegen den Träger mit einer Reihe von Stützelementen 11 abgestützt und um den Träger 8 rotierbar. Bei den Stützelementen 11 kann es sich, wie beispielsweise aus der US 3 802 044 bekannt, um hydrostatische Stützelemente handeln, welche in einer mit hydraulischem Durckmittel versorgten Zylinderführung 12 im Träger 8 in Stütz richtung verschiebbar sind und an ihrer Vorderseite eine hydrostatische Lagerfläche 13 aufweisen, welche über Drosselbohrungen 14 vom Zylinderraum 12 mit Hydraulikmittel versorgt wird und eine reibungsarme Rotation des Walzenmantels 10 gestattet.

Statt hydrostatisch geschmierter Stützelemente können jedoch auch andersartige Stützelemente verwendet werden, beispielsweise bekannte hydrodynamisch geschmierte Stützelemente, Druckkissen, Druckräume, elektromagnetische, pneumatische oder mechanische Stützelemente.

Die Stützelemente 11 können gemeinsam, gruppenweise oder individuell mit Druckmittel regelbaren Druckes versorgt sein. Somit kann über die Breite des Spaltes 5 bzw. der dort behandelten Warenbahn 4 ein individuell einstellbarer Druck erzeugt werden und z.B. ein gewünschtes Dickenprofil der gebildeten Kunststoffolie 6 nach dem Verlassen des Spaltes 5. Um eine Feinprofilregelung zu erreichen, ist es zweckmäßig, eine Anzahl von Stützelementen 11 nebeneinander anzuordnen und mit Druckmittel zu versorgen, dessen Druck für jedes Stützelement oder zumindest für Gruppen von Stützelementen individuell regelbar ist. Für eine Dickenprofilregelung erster Ordnung genügt jedoch unter Umständen ein einzelnes, sich über die gesamte Breite in der Form einer Stützleiste erstreckendes Stützelement oder eine Druckkammer, welche über eine einzige Leitung mit Druckmittel regelbaren Druckes versorgt wird und zusammen mit einer Lagerung des Walzenmantels 10 auf dem Träger 8 an den walzenmantelenden eine Profilregelung erster Ordnung, d.h. zwischen Walzenmitte und Walzenenden, gestattet. An den Enden ist die Durchbiegungseinstellwalze 1 mit Vorteil durch Dichtungen 15 abgedichtet, die in bekannter Weise auch zur Lagerung des Walzenmantels 10 auf dem Träger 8 oder zur Führung der Walzenmantelenden in Stützrichtung ausgebildet sein kann, wie z.B. in US 3 885 283 beschrieben.

Zur Verwendung der vorstehend beschriebenen Anordnung zum Glätten einer erhitzten Papierbahn oder zum Behandeln oder zum Gießen von Kunststoffolien mit einem engen Erstarrungsbereich von wenigen Grad Celsius, ist es erforderlich, die Temperatur im Spalt zwischen den beiden Walzen 1 und 2 mit einer relativ engen Toleranz von wenigen Grad Celsius konstant zu halten. Nur so können die gewünschten Eigenschaften der im Spalt 5 gebildeten oder behandelten Warenbahnen erreicht bzw. die plötzliche Erstarrung der Kunststoffmasse mit dem gewünschten Dickenprofil gewährleistet werden.

Um dieses Ziel zu erreichen, ist der Walzenmantel 10 aus mehreren konzentrischen Schichten aufgebaut. Als innere Schicht kann eine relativ dicke Schicht 16 mit gummiweicher Elastizität verwendet werden. Hierunter ist eine Schicht, beispielsweise aus Weichkautschuk zu verstehen oder ein Material mit analoger Elastizität, beispielsweise ein anderes Elastomer mit einer Shore-Härte A zwischen 40 und 95. Eine solche innere Schicht gestattet eine besonders flexible Regelung der Presskräfte über die Walzenbreite und somit eine hinreichend feine Profilregelung der erzeugten Plastikfolie über die Breite.

Im Zusammenhang mit der Behandlung von Warenbahnen durch Kühlung oder Erwärmung ist es besonders vorteilhaft, die innere Zone des Walzenmantels in zwei Bereiche zu unterteilen, nämlich einen radial äußeren Bereich und einen radial inneren Bereich, wobei der äußere Bereich härter ausgebildet ist als der innere Bereich. Der radial äußere Bereich kann beispielsweise aus Duromer/Plastomer mit einem Elastizitätmodul von etwa 10³ bis 10⁴ N/mm² bestehen, während der radial innere Bereich aus Plastomer/Elastomer bestehen kann und einen Elastizitätsmodul von etwa 10 bis 1,5 x 10⁵ N/mm² aufweisen kann. Vorzugsweise besitzt der radial äußere Bereich eine geringere radiale Stärke als der innere Bereich, und dieser äußere Bereich kann gemäß einer Ausführungsvariante mit Fasern verstärkt sein.

Innerhalb des radial innersten Bereichs können metallische Laufringe für die Lagerflächen der Stützelemente 11 vorgesehen sein, welche eine exakte Lagerung des Walzenmantels, eine störungsfreie Rotation um den Träger sowie eine exakte Kraftübertragung von den Stützelementen 11 auf den Walzenmantel 10 gewährleisten, wie z.B. aus US 4 058 877 oder 4 583 273 bekannt.

Die Einhaltung einer genau definierten Temperatur im Spalt 5 erfordert besondere Vorkehrungen. Zu diesem Zweck ist außen auf die tragend ausgebildete innere Zone 16, 16' des Walzenmantels 10 wenigstens eine dünne Schicht 17 mit besonders guter thermischer Leitfähigkeit aufgebracht. Besonders geeignet sind hierfür metallische Schichten, beispielsweise aus Kupfer oder Silber. Die Dicke dieser metallischen Schicht 17 ist so gewählt, daß die Schicht eine ausreichende Wärmemenge aus der Kunststoffmasse 4 oder einer Warenbahn aufnehmen kann, so daß im Spalt 5 eine schnelle Abkühlung oder Aufheizung stattfindet. In der Regel genügt eine Schichtdicke von höchstens 1 mm oder weniger. Um die Oberflächentemperatur der Walze 1 im Spalt 5 auf einen vorbestimmten Wert möglichst genau zu regeln, sind an der Außenseite der Walze 1 über wenigstens einen Teil ihres Umfanges sich erstreckende Kühlvorrichtungen 18 angeordnet. Diese sind mit Vorteil als Fluiddüsen ausgebildet, insbesondere als Gasdüsen, welche ein bestimmtes Kühlgas auf die Walzenoberfläche blasen und die im Spalt 5 aufgenommene Wärme wieder abführen. Die Gasdüsen 18 werden von einem Ventilator 19 betrieben, welcher aus der Umgebung Luft ansaugt und über die Gasdüsen 18 auf die Walzenoberfläche leitet. Der Ventilator 19 wird von einem Temperatursensor 20 vor dem Einlauf der Plastikmasse 4 in den Spalt 5 gesteuert, welcher die Temperatur der Walzenoberfläche kurz vor dem Einlauf in den Spalt 5 abtastet und den Ventilator 19 über einen Regler 21 so ansteuert, daß die vom Sensor 20 gemessene Temperatur einem vorgegebenen Sollwert entspricht.

Um ein Ankleben der erstarrenden Kunststoffmasse an die Walzenoberfläche zu vermeiden und bei Bedarf Glätte zu erzeugen, ist die Oberfläche spiegelglatt oder hochglänzend ausgeführt. Dies kann durch entsprechende Materialwahl und Behandlung der thermisch hochleitenden Schicht erfolgen, z.B. durch Polieren einer aus Silber oder einer Silberlegierung bestehenden Schicht 17 oder durch Aufbringen einer sehr dünnen z.B. ca. 0,1 mm dicken weiteren Schicht 22 auf die thermisch hochleitende Schicht 17, beispielsweise durch eine Glanzverchromung der aus Kupfer bestehenden thermisch leitfähigen Schicht 17.

Die Gegenwalze 2 kann analog aufgebaut sein wie die Durchbiegungseinstellwalze 1 oder als Massiv- oder Hohlwalze mit einer ebenfalls spiegelglatten Oberfläche.

In analoger Weise kann die Behandlung von Warenbahnen vorgenommen werden, wobei es darauf ankommt, daß im Spalt 5 nur jeweils eine solche Wärmemenge aus der Warenbahn in die Walzenoberfläche überführt wird, daß die geforderte definierte Behandlung der Warenbahn gewährleistet ist. Entsprechendes gilt für den Fall einer erforderlichen Aufheizung einer Warenbahn, wobei die Wärmezufuhr sehr definiert erfolgen muß.

Im Fall einer erforderlichen Kühlung ist es auch möglich, anstelle einer Fluidkühlung eine äußere Kühlwalze analog zu DE 39 00 294 vorzusehen.

Bei allen Arten der Behandlung von Papierbahnen in einem Glättkalander ist es von Vorteil, daß die Wärmespeicherkapazität der äußeren Zone und die Wärmeaufnahme- bzw. Wärmeabgabecharakteristik dieser äußeren Zone von der inneren Zone der Walze praktisch nicht beeinflußt wird und damit exakte Temperaturregelvorgänge möglich werden.

Von besonderem Vorteil ist es, die äußerste Schicht in Form einer sehr dünnen, beispielsweise galvanisch oder durch Bedampfen aufgebrachten Schicht mit einer Dicke bis zu 0,1 mm auszubilden, wobei eine sehr harte und dennoch flexible Oberfläche erhalten wird, die die Wirksamkeit der Durchbiegungseinstellwalze in keiner Weise beeinflußt und dennoch insbesondere zusammen mit einer hohe thermische Leitfähigkeit aufweisenden Trägerschicht, die dann zwischen dieser dünnen Schicht und der elastischen, vorzugsweise mehrschichtig aufgebauten inneren Zone gelegen ist, eine optimale Temperaturregelung im jeweiligen Spalt sicherstellt.

## Patentansprüche

1. Walze mit einem drehfesten Träger (8) und einem um diesen rotierbaren, aus einer inneren Zone (16, 16') mit zumindest zwei konzentrischen Bereichen (16, 16') und einer eine gute thermische Leitfähigkeit aufweisenden äußeren Zone (17, 22) aufgebauten Walzenmantel (10), der durch wenigstens ein in einer Preßebene eine Stützkraft ausübendes Stützelement abgestützt ist,
dadurch **gekennzeichnet,**
daß die innere Zone (16, 16') des Walzenmantels (10) als tragende, relativ dicke Zone ausgebildet ist und die wenigstens zwei konzentrischen Bereiche (16, 16') der inneren Zone (16, 16') aus elastisch verformbaren Material bestehen, wobei der radial äußere Bereich (16') jeweils einen größeren Elastizitätsmodul hat, und daß die eine gute thermische Leitfähigkeit aufweisende äußere Zone (17, 22) des Walzenmantels (10) als nichttragend mit einer Dicke bis zu etwa 1 mm ausgebildet ist.

2. Walze nach Anspruch 1,
dadurch **gekennzeichnet,**
daß die zumindest zweischichtig ausgebildete äußere Zone (17, 22) mit guter thermischer Leitfähigkeit eine harte, insbesondere hochglänzend oder feinprofiliert ausgeführte Oberfläche aufweist.

3. Walze nach Anspruch 2,
dadurch **gekennzeichnet,**
daß die an die äußerste Schicht (22) angrenzende Schicht (17) mit guter thermischer Leitfähigkeit aus Metall, z.B. aus Kupfer, Silber oder einer Legierung dieser Metalle besteht.

4. Walze nach Anspruch 2 oder 3,
dadurch **gekennzeichnet,**
daß zumindest die äußerste Schicht (22) aus einer galvanisch oder durch Bedampfen aufgebrachten Schicht besteht.

5. Walze nach Anspruch 4,
dadurch **gekennzeichnet,**
daß die äußerste Schicht (22) aus einer Hartverchromung besteht.

6. Walze nach Anspruch 5,
dadurch **gekennzeichnet,**
daß der Elastizitätsmodul des radial inneren Bereichs (16) der inneren Zone etwa im Bereich von 10 bis 10³ N/mm² gelegen ist, während der Elastizitätsmodul des radial äußeren Bereichs (16') der inneren Zone etwa im Bereich von 10³ bis 1,5 x 10⁵ N/mm² liegt.

7. Walze nach einem der vorhergehenden Ansprüche,
dadurch **gekennzeichnet,**
daß die radiale Stärke des äußeren Bereichs (16') der inneren Zone geringer ist als die radiale Stärke des inneren Bereichs (16) der inneren Zone.

8. Walze nach einem der vorhergehenden Ansprüche,
dadurch **gekennzeichnet,**
daß der radial äußere Bereich (16') der inneren Zone eine Faserverstärkung aufweist.

9. Walze nach einem der vorhergehenden Ansprüche,
dadurch **gekennzeichnet,**
daß das Verhältnis der Härten, Elastizitätsmodule und Schichtdicken der in Radialrichtung aufeinanderfolgenden Schichten (16, 16', 17, 22) derart gewählt ist, daß bei vorgegebener Belastungshöhe und Belastungsart die jeweils äußere Schicht von der darunterliegenden Schicht in der Weise abgestützt wird, daß keine Überschreitung der zulässigen Spannungen und/oder Dehnungen in der jeweils härteren Schicht auftritt.

10. Walze nach einem der vorhergehenden Ansprüche,
dadurch **gekennzeichnet,**
daß die äußere Zone (17, 22) mittels einer sich über wenigstens einen Teilbereich der Walzenoberfläche erstreckenden äußeren Kühl- oder Heizvorrichtung (18) auf eine vorgegebene Temperatur einstellbar ist.

11. Walze nach Anspruch 10,
dadurch **gekennzeichnet,**
daß an der Einlaufseite eines Walzenpaares der Walze zugeordnet ein Temperatursensor (20) zur Messung der Oberflächentemperatur der äußersten Zone (22) vorgesehen ist, welcher die Kühl- oder Heizvorrichtung (18) derart steuert, daß die Temperatur an der Meßstelle auf einen vorgegebenen Temperaturwert geregelt ist.

12. Walze nach einem der vorhergehenden Ansprüche,
dadurch **gekennzeichnet,**
daß Kühl- oder Heizgasdüsen (18) vorgesehen sind, durch welche ein Kühl- oder Heizgas auf die Oberfläche der äußersten Zone (22) der Walze geleitet wird.

13. Walze nach einem der vorhergehenden Ansprüche,
dadurch **gekennzeichnet,**
daß zu Kühl- oder Heizzwecken eine äußere Kühl- oder Heizwalze vorgesehen ist, die sich in Kontakt mit der äußersten Zone (22) der Walze befindet.

14. Walze nach einem der vorhergehenden Ansprüche,
dadurch **gekennzeichnet,**
daß das elastisch verformbare Material der inneren Zone (16, 16') eine geringe thermische Leitfähigkeit aufweist.

15. Verwendung einer Walze nach einem oder mehreren der vorhergehenden Ansprüche in einer Kunstoffolien-Gießanlage.

16. Verwendung nach Anspruch 15,
dadurch **gekennzeichnet,**
daß die Walze (1) mit einer Gegenwalze (2) derart zusammenarbeitet, daß im Spalt zwischen der Walze (1) und der Gegenwalze (2) ein in den Spalt (5) geleitetes fließfähiges Kunstoffmaterial (4) auf eine vorgegebene Erstarrungstemperatur abgekühlt wird.

17. Verwendung der Walze nach einem oder mehreren der Ansprüche 1 bis 16 zur Behandlung einer zu kühlenden oder zu erwärmenden Papierbahn in zumindest einem Walzenspalt.

## Claims

1. Roll comprising a rotationally fixed carrier (8) and a roll jacket (10) rotatable about the latter and built up of an inner zone (16, 16'), having at least two concentric regions (16, 16') and an outer zone (17, 22) having a good thermal conductivity, wherein the roll jacket (10) is supported by at least one support element exerting a supporting force in a pressing plane,
characterised in that the inner zone (16, 16') of the roll jacket (10) is formed as a load carrying, relatively thick zone, and the at least two concentric regions (16, 16') of the inner zone (16, 16') consist of elastically deformable material, wherein the radially outer region (16') in each case has a larger modulus of elasticity, and in that the outer zone (17, 22) of the roll jacket (10), having a good thermal conductivity, is not load carrying and has a thickness of up to approximately 1 mm.

2. Roll in accordance with claim 1, characterised in that the outer zone (17, 22) with a good thermal conductivity and formed to have at least two layers has a hard, in particular high gloss or finely profiled surface.

3. Roll in accordance with claim 2, characterised in that the layer (17) with good thermal conductivity adjoining the outermost layer (22) consists of metal, for example of copper, silver, or an alloy of these metals.

4. Roll in accordance with claim 2 or claim 3,
characterised in that at least the outermost layer (22) consists of a galvanically applied layer or a layer applied by vapour deposition.

5. Roll in accordance with claim 4, characterised in that the outermost layer (22) comprises a hard chrome layer.

6. Roll in accordance with claim 5, characterised in that the modulus of elasticity of the radially inner region (16) of the inner zone is placed in the region of 10³ N/mm², whereas the modulus of elasticity of the radially outer region (16') of the inner zone lies approximately in the range from 10³ to 1.5 x 10⁵ N/mm².

7. Roll in accordance with one of the preceding claims, characterised in that the radial thickness of the outer region (16') of the inner zone is fractionally smaller than the radial thickness of the inner region (16) of the inner zone.

8. Roll in accordance with one of the preceding claims, characterised in that the radially outer region (16') of the inner zone has a fibre reinforcement.

9. Roll in accordance with one of the preceding claims, characterised in that the ratio of the hardnesses, of the moduli of elasticity and of the layer thicknesses of the sequential layers (16, 16', 17, 22) in the radial direction is selected such that with a pre-given loading level and type of loading the respective outer layer is supported by the lower lying layer in such a way that the permissible stresses and/or elongations in the respective harder layer are not exceeded.

10. Roll in accordance with one of the preceding claims, characterised in that the outer zone (17, 22) can be set to a predetermined temperature by means of a cooling device or heating device (18) extending over at least a part region of the roll surface.

11. Roll in accordance with claim 10, characterised in that a temperature sensor (20) associated with the roll is provided at the inlet side of the roll pair to measure the surface temperature of the outermost zone (22), the temperature sensor controlling the cooling device or heating device (18) in such a way that the temperature at the measurement location is regulated to a predetermined temperature value.

12. Roll in accordance with one of the preceding claims, characterised in that cooling gas nozzles or heating gas nozzles (18) are provided through which a cooling gas or heating gas is directed onto the surface of the outermost zone (22) of the roll.

13. Roll in accordance with one of the preceding claims, characterised in that an outer cooling roll or heating roll is provided for cooling purposes or heating purposes and is located in contact with the outermost zone (22) of the roll.

14. Roll in accordance with one of the preceding claims, characterised in that the elastically deformable material of the inner zone (16, 16') has a low thermal conductivity.

15. Use of a roll in accordance with one or more of the preceding claims in a plastic foil casting plant.

16. Use in accordance with claim 15, characterised in that the roll (1) cooperates with a counter roll (2) in such a way that, in the gap between the roll (1) and the counter roll (2), a flowable plastic material (4) introduced into the gap (5) is cooled down to a predetermined solidification temperature.

17. Use of the roll in accordance with one or more of the claims 1 to 16 for the treatment of a paper web to be cooled or to be heated in at least one roll gap.

## Revendications

1. Rouleau comprenant un support (8) fixe en rotation et un bandage de rouleau (10) qui peut tourner autour de celui-ci et se compose d'une zone intérieure (16, 16') comprenant au moins deux régions concentriques (16, 16') et d'une zone extérieure (17, 22) à bonne conductibilité thermique et qui prend appui sur au moins un élément d'appui exerçant une force d'appui dans un plan de pression, caractérisé en ce que la zone intérieure (16, 16') du bandage (10) du rouleau est conçue sous la forme d'une zone porteuse relativement épaisse, et les régions concentriques (16, 16'), au nombre d'au moins deux, de la zone intérieure (16,16') sont réalisées en matériau déformable élastiquement, la région extérieure radiale (16') possédant un module d'élasticité plus élevé, et en ce que la zone extérieure (17, 22) appartenant au bandage (10) du rouleau et possédant une bonne conductibilité thermique n'est pas porteuse et présente une épaisseur maximale d'environ 1 mm.

2. Rouleau selon la revendication 1, caractérisé en ce que la zone extérieure (17, 22) comportant au moins deux couches et présentant une bonne conductibilité thermique possède une surface dure, en particulier à brillant élevé et à profilage fin.

3. Rouleau selon la revendication 2, caractérisé en ce que la couche (17) qui possède une bonne conductibilité thermique et qui est adjacente à la couche la plus extérieure (22) est réalisée en métal, par exemple en cuivre, en argent ou dans un alliage de ces métaux.

4. Rouleau selon la revendication 2 ou 3, caractérisé en ce qu'au moins la couche la plus extérieure (22) consiste en une couche réalisée par dépôt galvanique ou par vaporisation.

5. Rouleau selon la revendication 4, caractérisé en ce que la couche la plus extérieure (22) est réalisée par chromage dur.

6. Rouleau selon la revendication 5, caractérisé en ce que le module d'élasticité de la région intérieure radiale (16) de la zone intérieure est compris sensiblement entre 10 et 10³ N/mm², tandis que le module d'élasticité de la région extérieure radiale (16') de la zone intérieure est compris sensiblement entre 10³ et 1,5 x 10⁵ N/mm².

7. Rouleau selon l'une des revendications précédentes, caractérisé en ce que l'épaisseur radiale de la région extérieure (16') de la zone intérieure est inférieure à l'épaisseur radiale de la région intérieure (16) de la zone intérieure.

8. Rouleau selon l'une des revendications précédentes, caractérisé en ce que la région extérieure radiale (16') de la zone intérieure est renforcée par des fibres.

9. Rouleau selon l'une des revendications précédentes, caractérisé en ce que le rapport de dureté, de module d'élasticité et d'épaisseur de couche entre les couches (16, 16', 17, 22) qui se succèdent dans la direction radiale est choisi de façon que, à un niveau et un type de charge définis, la couche respectivement plus extérieure soit supportée par la couche sous-jacente, de manière que les tensions et/ou les allongements admis ne soient pas dépassés dans la couche plus dure.

10. Rouleau selon l'une des revendications précédentes, caractérisé en ce que la zone extérieure (17, 22) peut être réglée à une température prédéfinie au moyen d'un dispositif extérieur de refroidissement ou de chauffage (18) s'étendant sur au moins une région partielle de la surface du rouleau.

11. Rouleau selon la revendication 10, caractérisé en ce que sur le côté d'entrée d'une paire de rouleaux est prévu un capteur de température (20) qui est associé au rouleau et est destiné à mesurer la température superficielle de la zone la plus extérieure (22) et qui commande le dispositif de refroidissement ou de chauffage (18), de façon que la température au niveau du point de mesure soit régulée à une valeur de température prédéfinie.

12. Rouleau selon l'une des revendications précédentes, caractérisé en ce qu'il est prévu des buses de gaz de refroidissement ou de chauffage (18), à travers lesquelles un gaz de refroidissement ou de chauffage est dirigé vers la surface de la zone la plus extérieure (22) du rouleau.

13. Rouleau selon l'une des revendications précédentes, caractérisé en ce que, pour les besoins du refroidissement ou du chauffage, il est prévu un rouleau extérieur de refroidissement ou de chauffage qui se trouve en contact avec la zone la plus extérieure (22) du rouleau.

14. Rouleau selon l'une des revendications précédentes, caractérisé en ce que le matériau déformable élastiquement de la zone intérieure (16, 16') possède une faible conductibilité thermique.

15. Utilisation d'un rouleau selon une ou plusieurs des revendications précédentes dans une installation de coulée de feuilles en matière plastique.

16. Utilisation selon la revendication 15, caractérisée en ce que le rouleau (1) coopère avec un rouleau conjugué (2), de façon que, dans l'emprise existant entre le rouleau (1) et le rouleau conjugué (2), une matière plastique fluide (4) introduite dans l'emprise (5) soit refroidie à une 5 température de solidification prédéfinie.

17. Utilisation du rouleau selon une ou plusieurs des revendications 1 à 16, pour traiter une bande de papier à refroidir ou à chauffer dans au moins une emprise de rouleaux.
